# EUROPÄISCHE PATENTANMELDUNG

(11) **EP 0 525 560 A2**
(43) Veröffentlichungstag der Anmeldung: **03.02.1993**
(21) Anmeldenummer: 92112325.3
(22) Anmeldetag: 18.07.1992
(51) Int. Cl.: B23B 31/103, B23B 31/20, B23B 31/00

(54) **Schnellspannfutter**

(30) Priorität: 23.07.1991 DE 4124346
(71) Anmelder: JANKE & KUNKEL GMBH & CO. KG, D-79219 Staufen (DE)
(72) Erfinder: Vollrath, Thomas, Dipl.-Ing. (BA), W-7841 Auggen (DE); Jägle, Peter, W-7804 Ballrechten-Dottingen (DE)
(74) Vertreter: Patent- und Rechtsanwaltssozietät, Schmitt, Maucher & Börjes

(57) **Zusammenfassung**

Ein Schnellspannfutter (10) zur Aufnahme eines im Querschnitt kreisrunden Schaftes (11) eines Werkzeuges, beispielsweise einer Rührwerkzeugwelle, hat eine Futterhülse (2), in deren Innerem ein Hülsenfreilauf (3) fixiert ist, der in Drehrichtung des Antriebes sperrt, also beim Antrieb den in dem Freilauf (3) reibschlüssig erfaßten Schaft (11) in Drehrichtung mitnimmt, ohne daß es zuvor eines Spannvorganges bedarf. Eine Fixierung in axialer Richtung kann entweder mit einer geringen Spannkraft oder durch eine weitgehend selbsttätig wirkende Klemmvorrichtung erfolgen.

## Beschreibung

Die Erfindung betrifft ein Schnellspannfutter zur Aufnahme von Werkzeugen mit einem im Querschnitt runden Schaft, insbesondere von eine Rührwerkzeugwelle aufweisenden Rührwerkzeugen, mit einer Futterhülse.

Ein derartiges Schnellspannfutter ist beispielsweise aus DE 38 08 156 C2 bekannt. Dabei ist zum Verklemmen und Kuppeln ein Spannfutterschlüssel notwendig. Die Anwendung eines solchen Spannfutterschlüssels hat zum Beispiel im Zusammenhang mit Rührwerken den Nachteil, daß dieser beim Spannen versehentlich in die zu rührende Masse fallen kann, die oft eine Konsistenz oder Zusammensetzung aufweist, in die man nicht ohne weiteres mit der Hand hineinfassen kann und darf. Ferner kann das Rührgefäß aus bruchgefährdetem Werkstoff, zum Beispiel aus Glas bestehen und durch einen hinein- oder darauf fallenden Spannfutterschlüssel oder auch ein sonstiges Werkzeug zerstört werden.

Daneben gibt es zum Beispiel gemäß DE 39 20 075 C1 Schnellspannfutter, die aufgrund ihrer Umfangsgröße ein Anziehen und Verspannen von Hand erlauben. Diese sind jedoch nur für Bohrer oder dergleichen relativ kurze rotierende Werkzeuge mit definierter Einstecktiefe geeignet und lassen es nicht zu, eine beliebig lange Welle oder Antriebsachse zum Beispiel für einen Rührer beliebig weit einschieben zu können. Darüberhinaus kann mit der Hand selbst an einem relativ großen Umfang nur ein beschränktes Anzugsmoment aufgebracht werden.

Es besteht deshalb die Aufgabe, ein Schnellspannfutter der eingangs erwähnten Art zu schaffen, das eine beliebige Einstecktiefe des anzutreibenden Werkzeuges erlaubt, ohne daß ein Hilfswerkzeug oder eine sehr stark dimensionierte, von Hand erfaßbare Spannschraube erforderlich sind, wobei aber der Werkzeugschaft dennoch mit einem Antrieb schnell und einfach und trotzdem für hohe Drehmomente geeignet gekuppelt werden kann, ohne eine aufwendige Klemmvorrichtung oder gar eine formschlüssige Kupplung zu benötigen.

Diese Aufgabe wird dadurch gelöst, daß die Futterhülse des Schnellspannfutters einen Hülsenfreilauf aufweist, der den Schaft reibschlüssig erfaßt und der in Drehrichtung des Antriebes sperrt. Somit kann der Werkzeugschaft leicht eingeführt werden und für die Übertragung des Drehmomentes ist eine entsprechend starke Verspannung mit Hilfe eines Werkzeuges oder von Hand entbehrlich, weil diese über den Freilauf selbsttätig erzeugt wird, da das Drehmoment in Drehrichtung des Antriebes aufgrund der in dieser Drehrichtung erfolgenden Sperrung reibschlüssig übertragen wird.

Eine vorteilhafte Ausgestaltung der Erfindung kann darin bestehen, daß in der Futterhülse zwei entgegengesetzt zueinander sperrende Hülsenfreiläufe angeordnet sind. Somit ist eine Drehmomentübertragung in beiden Drehrichtungen möglich.

Für ein schnelles Ansprechen des Freilaufes bei der Übertragung eines Drehmomentes ist es vorteilhaft, wenn der Innendurchmesser des Freilaufes paßgenau dem Außendurchmesser des einzusetzenden Werkzeugschaftes oder der einzusetzenden Werkzeugwelle entspricht. Dadurch kann wirklich gleich beim Anlaufen des Antriebes auch das Drehmoment übertragen werden und der Freilauf zur Wirkung kommen.

Um einen ungelagerten Freilauf verwenden zu können und größere Tolerenzen zu ermöglichen, kann in der Futterhülse, in axialer Richtung benachbart zu dem Freilauf, insbesondere beidseits des Freilaufes, eine Führung für den Schaft in Form einer zylindrischen Paßfläche oder einer Buchse vorgesehen sein. Vorallem wird dadurch sichergestellt, daß selbst bei einem in axialer Richtung relativ kurzen Freilauf der Werkzeugschaft durch den Freilauf nicht schräg gestellt werden kann.

Besonders zweckmäßig ist es dabei, wenn das Schnellspannfutter eine Spann- oder Klemmvorrichtung zum Fixieren des Werkzeugschaftes in axialer Richtung aufweist.

Dadurch wird das Schnellspannfutter vorallem auch für eine Anordnung geeignet, bei welcher der Werkzeugschaft schräg oder gar vertikal angeordnet ist. Ferner wird dadurch eine Kraftübertragung am Werkzeug in axialer Richtung möglich.

Beispielsweise kann das Spannfutter als Klemmvorrichtung einen mehrfach in Längsrichtung geschlitzten Spannring aufweisen, der an seiner Außenseite eine Verjüngung hat, vorzugsweise konisch ausgebildet ist, und der mit einer Überwurfmutter, deren Innenfläche die sich verjüngende oder konische Außenseite des Spannringes beaufschlagt und insbesondere eine konisch gestaltete Innenfläche hat, in Wirkverbindung steht. Durch Anziehen der Überwurfmutter wird also die axiale Festlegung bewirkt. Dabei genügen relativ geringe Anzugsmomente, wenn beispielsweise bei einer vertikalen Anordnung einer Rührwerkswelle praktisch deren Gewicht gehalten werden soll.

Bei einer zweckmäßigen Ausführungsform kann die Außenseite des Spannringes als Kegel und die Innenfläche der Überwurfmutter als Innenkegel gestaltet sein und die Steigung des Kegels des Spannringes kann kleiner oder gleich der Steigung des Innenkegels der Überwurfmutter sein. Zum Festlegen eines Werkzeugschaftes ist also je nach gewählter Gewindesteigung an der Überwurfmutter nur eine geringe Handkraft notwendig. Gleichzeitig erhöht der Spannring das übertragbare Drehmoment durch Reibschluß, d.h. das von dem Spannring ausgehende Drehmoment kommt zu dem durch den Hülsenfreilauf gegebenen maximal übertragbaren Drehmoment noch hinzu.

Damit die Handkraft beim Anziehen der Überwurfmutter zur Übertragung einer Klemmkraft auf einen zu haltenden Werkzeugschaft möglichst gering ist und andererseits die Zahl der in dem Schnellspannfutter vorhandenen Teile klein gehalten wird, kann der Spannring mittels einer Übergangspassung oder eines Hinterschnittes an seinem Bund mit der Futterhülse verbunden sein.

Eine Verbesserung der Einsetzbarkeit des Werkzeugschaftes ergibt sich, wenn der Innendurchmesser der Überwurfmutter an deren ihrem Gewinde abgewandten Eintrittsende derart angefast ist, daß er auf den einzuführenden Werkzeugschaft eine zentrierende Wirkung ausübt, und wenn die Überwurfmutter in ihrer Eintrittsöffnung insbesondere einen Dichtring oder O-Ring aufweist, dessen Innendurchmesser kleiner oder gleich dem Innendurchmesser der Eintrittsöffnung der Überwurfmutter ist. Auf diese Weise kann die Überwurfmutter zur Zentrierung und Ausrichtung des Werkzeugschaftes beitragen und außerdem für eine Abdichtung beispielsweise gegen hochspritzendes Gut sorgen.

Um eine möglichst große Beständigkeit der Teile gegen aggressive oder korrosive Medien, wie sie in Laboratorien vorkommen, zu erreichen, können die Futterhülse und die Überwurfmutter zweckmäßigerweise aus nicht rostendem Stahl gefertigt sein. Auch der Dichtring besteht zweckmäßigerweise aus einem entsprechenden beständigen Kautschuk, zum Beispiel Kalrez-Perfluorelastomer.

Die Klemmrichtung des Freilaufes und die Drehrichtung des Gewindes der Überwurfmutter werden je nach Drehrichtung der Antriebswelle in der Weise festgelegt, daß der Freilauf sperrt und das Gewinde sich nicht während des Betriebes von selbst aufdreht. Vorteilhaft ist im Vergleich zu herkömmlichen Bohrfuttern ferner, daß durch die ausschließliche Verwendung von Drehteilen oder rotationssymmetrischen Teilen praktisch keine Unwuchten entstehen. Ein weiterer Vorteil besteht darin, daß das erfindungsgemäße Schnellspannfutter aufgrund seiner Anschlußmaße auch an Stelle herkömmlicher derartiger Kupplungen oder Befestigungsmittel an alten Rührwerken verwendet werden kann.

Es sei noch erwähnt, daß der oder die Freiläufe in die Futterhülse eingepreßt sein können, was eine sehr einfache Befestigungsart darstellt.

Eine Verbesserung der Bedienbarkeit für den Benutzer ergibt sich, wenn die Spann- oder Klemmvorrichtung selbsttätig klemmend ausgebildet ist. Es genügt dann, einen Werkzeugschaft einzuführen und dadurch zu bewirken, daß die selbsttätig klemmende Spann- oder Klemmvorrichtung ihn in axialer Richtung festlegt. Zusätzlich erfolgt durch den oder die Freiläufe auch die Festlegung in Drehrichtung, so daß durch ein einfaches Einstecken des Werkzeugschaftes ein gesamtes Werkzeug oder eine Rührvorrichtung oder dergleichen betriebsbereit ist. Eine konstruktive Ausgestaltung dieser Maßnahmen kann dabei darin bestehen, daß die Futterhülse als Spann- oder Klemmvorrichtung benachbart zu dem Freilauf ein Klemmplättchen aufweist, das eine Durchtrittsöffnung für den Werkzeugschaft oder die Rührwerkswelle hat, die geringfügig größer als der Durchmesser dieses Schaftes oder dieser Welle ist, daß das Klemmplättchen einseitig kippbar innerhalb eines in axialer und radialer Richtung ausreichend großen Freistiches oder Hohlraumes der Futterhülse in einem Halteschlitz einseitig und kippbar gehalten ist. In der gekippten Normalstellung ergibt sich also eine Verkantung gegenüber einem eingesteckten Werkzeugschaft, so daß er in axialer Richtung entgegen der Einsteckrichtung festgelegt ist.

Dabei ist es zweckmäßig, wenn das Klemmplättchen in seiner Schrägstellung gehalten ist und gegen eine Rückstellkraft aus dieser Schrägstellung in eine weniger schräge oder radiale Position, in welcher die Ebene der Durchgangslochung des Klemmringes etwa rechtwinklig zur Längsmittelachse des Schnellspannfutters steht, verstellbar ist. Zum Lösen der Klemmverbindung braucht also das Klemmplättchen nur aus seiner schrägen Halteposition etwas entgegen dieser Schrägstellung verschwenkt oder verkippt zu werden, um die Verkantung gegenüber einem Werkzeugschaft aufzuheben und diesen dann entnehmen zu können. Die Rückstellkraft sorgt dabei dafür, daß das Klemmplättchen selbst immer bestrebt ist, seine Schrägstellung einzunehmen, so daß es also beispielsweise beim Einschieben eines Werkzeugschaftes zwar gegen diese Rückstellkraft etwas verschwenkt wird, um das Einschieben zu ermöglichen, wobei gleichzeitig dieses Einschieben auch die erforderliche Überwindung der Rückstellkraft bewirkt, daß aber dann in der Gebrauchsstellung die selbsttätige Verkantung und Verklemmung vorhanden ist, die zum Lösen des Werkzeugschaftes aus dem Schnellspannfutter aufzuheben ist.

Zur Erzeugung der Rückstellkraft für das Klemmplättchen kann ein Federelement, insbesondere ein Puffer oder eine Feder vorgesehen sein.

Um die Klemmverbindung des Klemmplättchens lösen zu können, kann an dem Klemmplättchen ein Verstell- oder Schiebeteil angreifen, durch dessen Betätigung das Klemmplättchen in seine Lösestellung verschwenkbar ist. Soll also eine selbsttätig fixierte Rührwerkwelle wieder gelöst werden, braucht der Benutzer nur das erwähnte Verstell- oder Schiebeteil zu betätigen, um das Klemmplättchen aus seiner Halteposition zu verschwenken, so daß es dann die Rührwerkswelle oder einen Werkzeugschaft freigibt.

Eine konstruktiv einfache Anordnung kann dabei darin bestehen, daß das Klemmplättchen im Bereich seiner exzentrischen Lagerung radial über die Futterhülse insbesondere nach außen vorsteht und die Futterhülse von einer als Verstellteil dienenden Außenhülse umschlossen ist, die gegen die Rückstellkraft relativ zu der Futterhülse axial verschiebbar ist, den überstehenden Rand des Klemmplättchens beaufschlagt und bei ihrer Verschiebung mitnimmt. Durch diese Mitnahme des überstehenden Randes des Klemmplättchens wird der auf der abgewandten Seite der Schwenklagerung befindliche Teil des Klemmplättchens entgegengesetzt, also bei richtiger Verschiebung der Außenhülse in Offenstellung verschwenkt.

Eine andere Ausgestaltung kann darin bestehen, daß der über seine Lagerstelle überstehende Bereich des Klemmplättchens als Betätigungstaste ausgebildet und vorzugsweise abgewinkelt ist und gegen die Futterhülse oder den Boden einer Aussparung dieser Futterhülse bewegbar ist und daß insbesondere die Unterseite dieser Taste oder Abwinkelung abgefedert ist. Somit braucht der Benutzer zum Lösen der Verkantung und Klemmverbindung des Klemmplättchens lediglich auf die genannte Abwinkelung oder Taste zu drücken, um die als Rückstellkraft dienende Abfederung zu überwinden und die Klemmverbindung zu lösen.

Eine weitere Ausführungsform kann vorsehen, daß das Verstell- oder Schiebeteil das Klemmplättchen insbesondere beidseits seiner Durchtrittsöffnung untergreift und radial verschiebbar ist.

Falls eine selbsttätig wirksame Klemmvorrichtung und nicht zusätzlich noch eine von Hand zu betätigende, vorallem eine Überwurfmutter aufweisende Spann- oder Klemmvorrichtung vorhanden ist, ist es zweckmäßig, wenn im unteren Bereich der Futterhülse an deren Eintrittsöffnung eine Anfasung zum Erleichtern des Einführens der Werkzeugwelle oder dergleichen und/oder ein Dichtring oder O-Ring angeordnet sind. Somit kann auch bei einer solchen keine Überwurfmutter aufweisenden Anordnung ein Werkzeugschaft oder eine Werkzeugwelle bequem eingeführt und gleichzeitig von der Einführöffnung ausgerichtet oder justiert und mit Hilfe des genannten Dichtringes oder O-Ringes abgedichtet werden.

Es sei noch erwähnt, daß die Aussparung mit der zum Verschwenken des Klemmplättchens dienenden Abwinkelung dieses Klemmplättchens und/oder das Verstellteil durch einen insbesondere elastischen Außenring abgeschlossen sein kann, um auch diesen Bereich vor hochspritzendem Gut zu schützen.

Insgesamt ergibt sich bei Kombination einzelner oder mehrerer der vorbeschriebenen Merkmale und Maßnahmen ein Schnellspannfutter, welches ein hohes Drehmoment erlaubt, ohne daß Hilfswerkzeuge zu seinem Festspannen erforderlich sind oder ohne daß das Festspannen gar von Hand in eventuell unzulänglicher Weise erfolgen muß. Das höchstmögliche Drehmoment wird vielmehr durch die Wahl eines entsprechenden Freilaufes bestimmt und unabhängig von den Kräften eines Benutzers dadurch von vorne herein festgelegt. Gleichzeitig kann ein Werkzeugschaft oder eine Rührwerkwelle oder dergleichen auch in axialer Richtung bequem und mit geringem Kraftaufwand oder sogar selbsttätig fixiert werden, so daß die gesamte Anordnung vorallem so erfolgen kann, daß der Werkzeugschaft oder die Welle in Gebrauchsstellung vertikal angeordnet sind. Dies ist vorallem dann zweckmäßig, wenn eine Rührwerkwelle senkrecht in ein entsprechendes Rührgefäß eingesetzt werden soll. Dabei ist ferner vorteilhaft, daß das gesamte Schnellspannfutter aus relativ wenig Einzelteilen besteht und somit auch der Herstellungsaufwand begrenzt ist.

Nachstehend sind Ausführungsbeispiele der Erfindung anhand der Zeichnung näher beschrieben. Es zeigt in zum Teil schematisierter Darstellung:
Fig. 1 eine Gesamtansicht einer Rühranordnung, bei welcher die Welle eines Rührwerkzeuges in einem erfindungsgemäßen Schnellspannfutter eingespannt ist,
Fig. 2 einen Längsschnitt eines erfindungsgemäßen Schnellspannfutters,
Fig. 3 einen Längsschnitt einer abgewandelten Ausführungsform eines Schnellspannfutters,
Fig. 4 einen Querschnitt des Schnellspannfutters aus Fig. 3 gemäß der Linie A-A sowie
Fig. 5 wiederum einen Längsschnitt eines abgewandelten erfindungsgemäßen Schnellspannfutters.

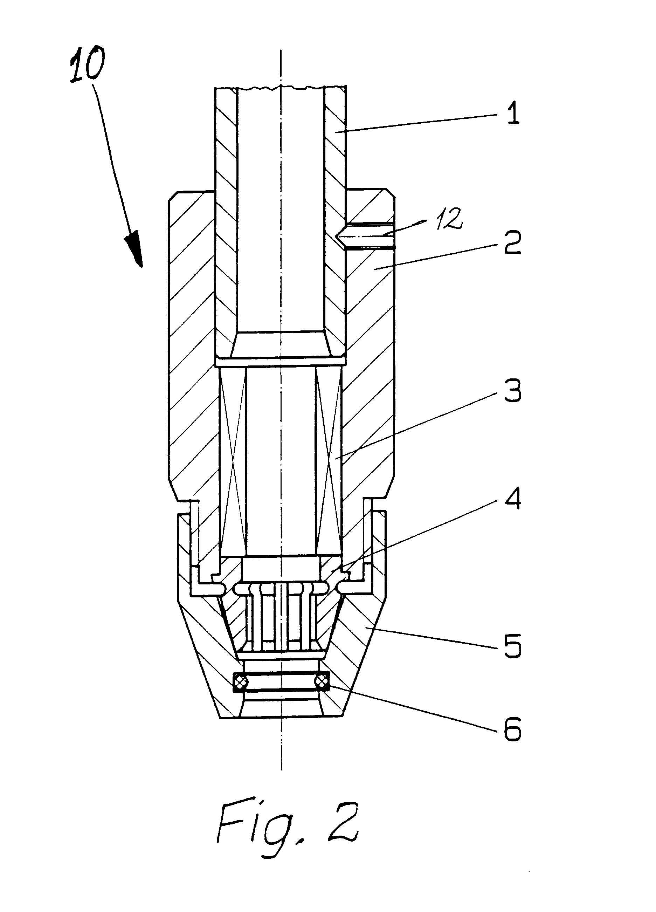

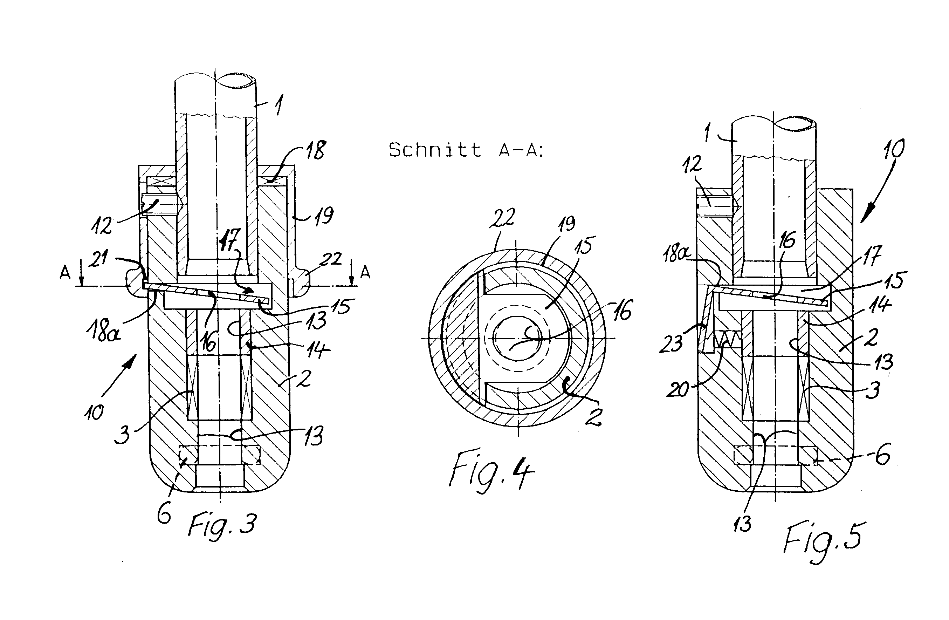

In Figur 2 ist detailliert im Längsschnitt ein im Ganzen mit 10 bezeichnetes Schnellspannfutter ohne eingespanntes Werkzeug dargestellt. Das Gleiche gilt für die Figuren 3 und 5, wobei in allen Ausführungsbeispielen für übereinstimmende Teile übereinstimmende Bezugszeichen vorgesehen sind, auch wenn die Teile etwas voneinander abweichen.

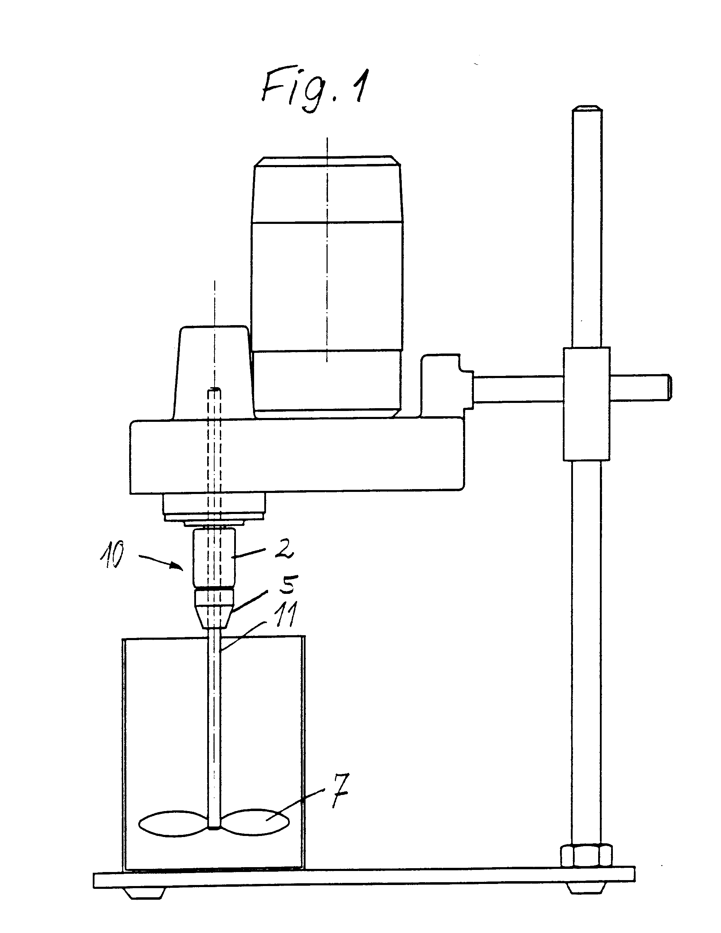

Das Schnellspannfutter 10 aller Ausführungsbeispiele dient zur Aufnahme von im Querschnitt kreisrunden Werkzeugschäften, wobei in Figur 1 als ein Anwendungsbeispiel eines solchen Werkzeugschaftes eine Welle 11 eines Rührwerkzeuges 7 dargestellt ist. Dabei kann jeweils ein Schnellspannfutter 10 für einen bestimmten Durchmesser von zum Beispiel 6, 8, 10 mm und so weiter hergestellt werden.

Es ermöglicht ein Einspannen ohne die Zuhilfenahme von Hilfswerkzeugen wie zum Beispiel Bohrfutterschlüsseln. Vorteilhaft ist weiterhin die Durchsteckbarkeit des Schaftes 11 beziehungsweise dessen beliebige axiale Positionierung.

Das Schnellspannfutter 10 weist eine Futterhülse 2 auf, die mit einer Zapfen- oder Madenschraube 12 mit einer Antriebshohlwelle 1 verbunden wird. In die Futterhülse 2 ist ein Hülsenfreilauf 3 mit Lagerung oder gegebenenfalls auch ohne eine solche Lagerung eingepreßt. Der Freilauf 3 sperrt in Drehrichtung des Antriebes der Hohlwelle 1, so daß dessen Drehmoment reibschlüssig auf den von dem Freilauf 3 kraftschlüssig erfaßten Schaft 11 übertragen wird. In den dargestellten Ausführungsbeispielen hat das Spannfutter 10 jeweils nur einen Freilauf 3, der also das Drehmoment nur in einer Drehrichtung übertragen kann. Es wäre jedoch auch möglich, in der Futterhülse 2 zwei entgegengesetzt zueinander sperrende Hülsenfreiläufe 3 anzuordnen, um einen Antrieb in beiden Drehrichtungen zu ermöglichen.

Der Innendurchmesser des Freilaufes 3 entspricht paßgenau dem Außendurchmesser des einzusetzenden Werkzeugschaftes 11 oder der einzusetzenden Werkzeugwelle. Die Lagerung des Freilaufes 3 hat dabei die Funktion, eine Führung des Werkzeugschaftes zu bewirken.

In den Ausführungsbeispielen nach Figur 3 und 5 ist vorgesehen, daß die Futterhülse 2 in axialer Richtung benachbart zu dem Freilauf 3, beidseits des Freilaufes 3 eine Führung für den Schaft 11 in Form einer jeweils zylindrischen Paßfläche 13 aufweist, wobei diese Paßfläche 13 auf der der Hohlwelle 1 zugewandten Seite des Freilaufes 3 in einer Buchse 14 vorgesehen ist.

In allen Ausführungsbeispielen hat das Schnellspannfutter 10 eine Spann- oder Klemmvorrichtung zum Fixieren des jeweiligen Werkzeugschaftes 11 in axialer Richtung, was insbesondere bei der vorteilhaften vertikalen Anordnung gemäß Figur 1 zweckmäßig ist. Diese Spann- und Klemmvorrichtung ist bei den verschiedenen Ausführungsbeispielen unterschiedlich ausgebildet.

Im Ausführungsbeispiel gemäß Figur 2 weist das Spannfutter 10 als Klemmvorrichtung einen mehrfach in Längsrichtung geschlitzten Spannring 4 auf, der an seiner Außenseite eine Verjüngung hat, in dem er konisch ausgebildet ist, und der mit einer Überwurfmutter 5, deren Innenfläche die sich verjüngende oder konische Außenseite des Spannringes 4 beaufschlagt und insbesondere ebenfalls eine konisch gestaltete Innenfläche hat, in Wirkverbindung steht. Die Außenseite des Spannringes 4 ist dabei als Kegel und die Innenfläche der Überwurfmutter 5 als Innenkegel gestaltet. Die Steigung des Kegels des Spannringes 4 weicht dabei von der des Innenkegels der Überwurfmutter 5 in der Weise ab, daß erst nach einer gewissen Zusammendrückung die Kegelflächen aneinander zu liegen kommen. Wird die Überwurfmutter 5 auf den Spannring 4 geschraubt, wird dieser aufgrund seiner Schlitzung in radialer Richtung zusammengedrückt und dadurch die Rührwerkswelle 11 in axialer Richtung fixiert. Der Spannring 4 ist dabei mittels eines Hinterschnittes an seinem Bund mit der Futterhülse 2 verbunden.

An ihrem dem Gewinde abgewandten Eintrittsende ist der Innendurchmesser der Überwurfmutter 5 derart angefast, daß er eine zentrierende und ausrichtende Wirkung auf den einzuführenden Werkzeugschaft 11 ausübt und dessen Einführen erleichtert. In der Eintrittsöffnung hat dabei die Überwurfmutter 5 einen als O-Ring 6 ausgebildeten Dichtring, dessen Innendurchmesser gleich oder kleiner als der Innendurchmesser der Eintrittsöffnung der Überwurfmutter 5 ist, so daß das Innere des Schnellspannfutters 10 in Gebrauchsstellung und beim Rühren gegen hochspritzendes Gut abgedichtet ist. Alle außenseitigen Teile können dabei zweckmäßigerweise aus nicht rostendem Stahl bestehen.

Der oder die Freiläufe 3 können in allen Ausführungsbeispielen dadurch fixiert sein, daß sie in die Futterhülse 2 eingepreßt sind. Somit ergibt sich eine insgesamt einfache Konstruktion.

Statt des mit einer Überwurfmutter 5 zusammenwirkenden Spannringes 4 ist in den Ausführungsbeispielen gemäß Figur 3 bis 5 als Spann-und Klemmvorrichtung in der Futterhülse 2 benachbart zu dem Freilauf 3 ein Klemmplättchen 15 angeordnet, das eine Durchtrittsöffnung 16 für den Werkzeugschaft 11 oder die Rührwerkswelle 11 hat, wobei diese Durchtrittsöffnung 16 geringfügig größer als der Durchmesser dieses Schaftes oder dieser Welle 11 ist. Das Klemmplättchen 15 ist dabei einseitig kippbar innerhalb eines in axialer und radialer Richtung ausreichend großen Freistiches oder Hohlraumes 17 der Futterhülse 2 in einem Halteschlitz 18 einseitig und kippbar, also gegenüber seiner Durchtrittsöffnung 16 exzentrisch gehalten. Die Kipp- und Halteposition erkennt man dabei deutlich in den Figuren 3 und 5. In einer solchen Lage wird ein die Durchtrittsöffnung 16 durchsetzender, in seinem Querschnitt etwa dieser Öffnung 16 entsprechender Werkzeugschaft durch die Verkantung mit den Rändern der Durchtrittsöffnung 16 in axialer Richtung fixiert.

Dabei erkennt man anhand der Figuren 3 und 5, daß das Klemmplättchen 15 in seiner Schrägstellung gehalten und fixiert ist und gegen eine Rückstellkraft aus dieser Schrägstellung in eine weniger schräge oder radiale Position verschwenkt, bei der vertikalen Anordnung gemäß Figur 3 und 5 also angehoben werden kann, in welcher die Ebene der Durchtrittsöffnung 16 des Klemmplättchens 15 etwa rechtwinklig zur Längsmittelachse des Schnellspannfutters 10 steht, verstellbar ist. Im Ausführungsbeispiel nach Figur 3 wird die Rückstellkraft beispielsweise durch die Schwerkraft beziehungsweise durch einen Puffer 18 an einer noch zu beschreibenden, das Klemmplättchen 15 beaufschlagenden Außenhülse 19 bewirkt, während im Ausführungsbeispiel nach Figur 5 zur Erzeugung der Rückstellkraft eine Feder 20 vorgesehen ist. In beiden Ausführungsbeispielen wird also die Schwerkraft durch ein Federelement unterstützt, so daß diese Anordnung auch für Fälle möglich ist, bei denen das Schnellspannfutter 10 mit seiner Achse etwa horizontal orientiert ist, also keine Schwerkraftwirkung auf das Klemmplättchen 15 auftritt.

Für eine einfache Bedienung der in den Figuren 3 und 5 vorgesehenen Klemmvorrichtung greift an dem Klemmplättchen 15 in beiden Fällen ein jeweils verschieden ausgestaltetes Verstellteil oder Schiebeteil an, durch dessen Betätigung das Klemmplättchen 15 in seine Lösestellung bewegbar ist.

Beim Ausführungsbeispiel nach Figur 3 und 4 steht das Klemmplättchen 15 im Bereich seiner exzentrischen Lagerung radial über die Futterhülse 2 nach außen vor und die Futterhülse 2 ist von der schon erwähnten, als Verstellteil dienenden Außenhülse 19 umschlossen. Diese Außenhülse 19 ist gegen die Rückstellkraft des Puffers 18 relativ zu der Futterhülse 2 axial verschiebbar und zwar aus der in Figur 3 dargestellten Position abwärts. Sie beaufschlagt mit einer Innennut 21 den überstehenden Rand des Klemmplättchens 15 und nimmt diesen bei der Verschiebung aus der in Figur 3 dargestellten Position soweit mit, daß das Klemmplättchen 15 im Inneren des Hohlraumes 17 aus seiner in Figur 3 dargestellten schrägen Halteposition nach oben verschwenkt wird, wodurch eine Verkantung und Verklemmung gegenüber einem Werkzeugschaft an den Rändern der Durchtrittsöffnung 16 gelöst wird, weil diese Durchtrittsöffnung 16 geringfügig größer als der Werkzeugschaft ist.

Die Außenhülse 19 hat dabei an ihrem der Außenseite der Futterhülse 2 befindlichen Bereich, im Ausführungsbeispiel an ihrem Randbereich, einen radial nach außen überstehenden Betätigungswulst 22, an welchem ein Benutzer bequem angreifen kann. In zweckmäßiger Weise ist dabei der Puffer 18 zwischen der Stirnseite der Futterhülse 2 und einem Boden der Außenhülse 19 angeordnet. Im Bereich des Betätigungswulstes 22 der Außenhülse 19 ist innenseitig die Nut 21 als Aussparung vorgesehen, die den Überstand des in diesem Bereich schwenk- und kippbar gelagerten Klemmplättchens 15 in sich aufnimmt, so daß ein Verschieben der Außenhülse 15 aus der in Figur 3 dargestellten Ruhelage in der schon beschriebenen Weise das Klemmplättchen im Inneren des Hohlraumes 17 anhebt, während ein Loslassen der Außenhülse 19 dann den Puffer 18 wirksam werden läßt, der die Außenhülse 19 wieder in die in Figur 3 dargestellte Position verschiebt, wodurch das Klemmplättchen 15 in Sperrstellung gelangt. Beim Einschieben eines Werkzeugschaftes 11 kann also ein Benutzer mit einer Hand diesen Werkzeugschaft von unten her in die Futterhülse 2 und den Freilauf 3 einstekken und einschieben, während er mit der anderen Hand von oben her die Außenhülse 19 abwärts drückt. Das Einführen des Werkzeugschaftes 11 unterstützt dabei die entsprechende Verstellung des Klemmplättchens 15, während nach dem Loslassen der gesamten Vorrichtung die Verklemmung selbsttätig bewirkt wird. Da außerdem der Freilauf 3 in Drehrichtung eine selbsttätige Verbindung und Übertragung eines Drehmomentes schafft, ist dadurch der Werkzeugschaft 11 bereits fixiert und kann angetrieben werden.

Im Ausführungsbeispiel nach Figur 5 ist der über seine Lagerstellung radial nach außen überstehende Bereich des Klemmplättchens 15 als Betätigungstaste 23 ausgebildet und in diesem Ausführungsbeispiel dabei einstückig mit dem Klemmplättchen 15 verbunden und abgewinkelt. Diese als Abwinkelung ausgebildete Betätigungstaste 23 kann gegen die Futterhülse 2 oder eine Aussparung dieser Futterhülse bewegt werden und ist an ihrer Unterseite mit der Feder 20 abgefedert, so daß also beim Niederdrücken dieser Betätigungstaste 23 die Rückstellkraft der Feder 20 überwunden und dadurch das Klemmplättchen 15 aus der in Figur 5 dargestellten Halteposition in die angehobene Lösestellung verschwenkt werden kann.

Denkbar wäre stattdessen auch, daß ein Verstell- oder Schiebeteil das Klemmplättchen 15 insbesondere beidseits seiner Durchtrittsöffnung 16 untergreift und radial verschiebbar ist, um es in die Löseposition zu bringen.

Auch in den Ausführungsbeispielen gemäß Figur 3 bis 5 ist im unteren Bereich der Futterhülse 2 an deren Eintrittsöffnung eine Anfasung zum Erleichtern des Einführens der Werkzeugwelle 11 und ein O-Ring 6 zur Abdichtung zwischen Schaft 11 und dem Inneren des Schnellspannfutters 10 vorgesehen.

Da die Anschlußmaße des Schnellspannfutters 10 aller Ausführungsbeispiele den Anschlußmaßen herkömmlicher Spannfutter an Rührwerken oder dergleichen entsprechen können, können auch schon bestehende derartige Rührwerke auf die vorteilhaften Schnellspannfutter 10 umgerüstet werden.

Das Schnellspannfutter 10 zur Aufnahme eines im Querschnitt kreisrunden Schaftes 11 eines Werkzeuges, beispielsweise einer Rührwerkzeugwelle, hat eine Futterhülse 2, in deren Innerem ein Hülsenfreilauf 3 fixiert ist, der in Drehrichtung des Antriebes sperrt, also beim Antrieb den in dem Freilauf 3 reibschlüssig erfaßten Schaft 11 in Drehrichtung mitnimmt, ohne daß es zuvor eines Spannvorganges bedarf. Eine Fixierung in axialer Richtung kann entweder mit einer geringen Spannkraft oder durch eine weitgehend selbsttätig wirkende Klemmvorrichtung erfolgen.

## Patentansprüche

1. Schnellspannfutter (10) zur Aufnahme von Werkzeugen mit einem im Querschnitt runden Schaft (11), insbesondere von eine Rühr-Werkzeugwelle (11) aufweisenden Rührwerkzeugen (7), mit einer Futterhülse (2), dadurch gekennzeichnet, daß die Futterhülse (2) des Schnellspannfutters (10) einen Hülsenfreilauf (3) aufweist, der den Schaft (11) reibschlüssig erfaßt und der in Drehrichtung des Antriebes sperrt.

2. Schnellspannfutter nach Anspruch 1, dadurch gekennzeichnet, daß in der Futterhülse (2) zwei entgegengesetzt zueinander sperrende Hülsenfreiläufe (3) angeordnet sind.

3. Schnellspannfutter nach Anspruch 1 oder 2, dadurch gekennzeichnet, daß der Innendurchmesser des Freilaufes (3) paßgenau dem Außendurchmesser des einzusetzenden Werkzeugschaftes (11) oder der einzusetzenden Werkzeugwelle (11) entspricht.

4. Schnellspannfutter nach einem der Ansprüche 1 bis 3, dadurch gekennzeichnet, daß in der Futterhülse (2), in axialer Richtung benachbart zu dem Freilauf (3), insbesondere beidseits des Freilaufes (3), eine Führung für den Schaft (11) in Form einer zylindrischen Paßfläche (13) und/oder einer Buchse (14) vorgesehen ist.

5. Schnellspannfutter nach einem der Ansprüche 1 bis 4, dadurch gekennzeichnet, daß das Schnellspannfutter (10) eine Spann- oder Klemmvorrichtung zum Fixieren des Werkzeugschaftes (11) in axialer Richtung aufweist.

6. Schnellspannfutter nach einem der Ansprüche 1 bis 5, dadurch gekennzeichnet, daß das Spannfutter (10) als Klemmvorrichtung einen mehrfach in Längsrichtung geschlitzten Spannring (4) aufweist, der an seiner Außenseite eine Verjüngung hat, vorzugsweise konisch ausgebildet ist, und der mit einer Überwurfmutter (5), deren Innenfläche die sich verjüngende oder konische Außenseite des Spannringes (4) beaufschlagt und insbesondere eine konisch gestaltete Innenfläche hat, in Wirkverbindung steht.

7. Schnellspannfutter nach einem der Ansprüche 1 bis 6, dadurch gekennzeichnet, daß die Außenseite des Spannringes (4) als Kegel und die Innenfläche der Überwurfmutter (5) als Innenkegel gestaltet sind und daß die Steigung des Kegels des Spannringes kleiner oder gleich der Steigung des Innenkegels der Überwurfmutter (5) ist.

8. Schnellspannfutter nach einem der Ansprüche 1 bis 7, dadurch gekennzeichnet, daß der Spannring (4) mittels einer Übergangspassung oder eines Hinterschnittes an seinem Bund mit der Futterhülse (2) verbunden ist.

9. Schnellspannfutter nach einem der Ansprüche 1 bis 8, dadurch gekennzeichnet, daß der Innendurchmesser der Überwurfmutter (5) an deren ihrem Gewinde abgewandten Eintrittsende derart angefast ist, daß er auf den einzuführenden Werkzeugschaft (11) eine zentrierende Wirkung ausübt, und daß die Überwurfmutter (5) in ihrer Eintrittsöffnung insbesondere einen Dichtring oder O-Ring (6) aufweist, dessen Innendurchmesser kleiner oder gleich dem Innendurchmesser der Eintrittsöffnung der Überwurfmutter (5) ist.

10. Schnellspannfutter nach einem der Ansprüche 1 bis 9, dadurch gekennzeichnet, daß der oder die Freiläufe (3) in die Futterhülse (2) eingepreßt sind.

11. Schnellspannfutter nach einem der Ansprüche 1 bis 10, dadurch gekennzeichnet, daß die Spann- oder Klemmvorrichtung selbsttätig klemmend ausgebildet ist.

12. Schnellspannfutter nach einem der Ansprüche 1 bis 9, dadurch gekennzeichnet, daß die Futterhülse (2) als Spann- oder Klemmvorrichtung benachbart zu dem Freilauf (3) ein Klemmplättchen (15) aufweist, das eine Durchtrittsöffnung (16) für den Werkzeugschaft (10) oder die Rührwerkzeugwelle (11) hat, die geringfügig größer als der Durchmesser dieses Schaftes oder dieser Welle (11) ist, daß das Klemmplättchen (15) einseitig kippbar innerhalb eines in axialer und radialer Richtung ausreichend großen Freistiches oder Hohlraumes (17) der Futterhülse (2) in einem Halteschlitz (18a) einseitig und kippbar gehalten ist.

13. Schnellspannfutter nach Anspruch 12, dadurch gekennzeichnet, daß das Klemmplättchen (15) in seiner Schrägstellung gehalten ist und gegen eine Rückstellkraft aus dieser Schrägstellung in eine weniger schräge oder radiale Position, in welcher die Ebene der Durchtrittsöffnung (16) des Klemmplättchens (15) etwa rechtwinklig zur Längsmittelachse des Schnellspannfutters (10) steht, verstellbar ist.

14. Schnellspannfutter nach Anspruch 12 oder 13, dadurch gekennzeichnet, daß zur Erzeugung der Rückstellkraft für das Klemmplättchen (15) ein Federelement, insbesondere ein Puffer (18) oder eine Feder (20) vorgesehen ist.

15. Schnellspannfutter nach einem der vorstehenden Ansprüche, dadurch gekennzeichnet, daß an dem Klemmplättchen (15) ein Verstell- oder Schiebeteil angreift, durch dessen Betätigung das Klemmplättchen (15) in seine Lösestellung bewegbar oder verschwenkbar ist.

16. Schnellspannfutter nach einem der Ansprüche 1 bis 15, dadurch gekennzeichnet, daß das Klemmplättchen (15) im Bereich seiner exzentrischen Lagerung radial über die Futterhülse (2) insbesondere nach außen vorsteht und die Futterhülse (2) von einer als Verstellteil dienenden Außenhülse (19) umschlossen ist, die gegen die Rückstellkraft relativ zu der Futterhülse (2) axial verschiebbar ist, den überstehenden Rand des Klemmplättchens (15) beaufschlagt und bei ihrer Verschiebung mitnimmt.

17. Schnellspannfutter nach einem der Ansprüche 1 bis 16, dadurch gekennzeichnet, daß die Außenhülse (19) zum Verschwenken des Klemmplättchens (15) in ihrem an der Außenseite der Futterhülse (2) befindlichen Bereich, vorzugsweise an ihrem dort befindlichen Rand einen radial nach außen überstehenden Betätigungswulst (22) oder dergleichen hat.

18. Schnellspannfutter nach einem der Ansprüche 1 bis 17, dadurch gekennzeichnet, daß im Bereich des Betätigungswulstes (22) der Außenhülse (19) innenseitig eine Aussparung oder Nut (21) vorgesehen ist, die den Überstand des in diesem Bereich schwenk- und kippbar gelagerten Klemmplättchens (15) in sich aufnimmt.

19. Schnellspannfutter nach einem der Ansprüche 1 bis 18, dadurch gekennzeichnet, daß der über seine Lagerstelle überstehende Bereich des Klemmplättchens (15) als Betätigungstaste (23) ausgebildet und vorzugsweise abgewinkelt ist und gegen die Futterhülse (2) oder den Boden einer Aussparung dieser Futterhülse bewegbar ist und daß insbesondere die Unterseite dieser Taste (23) oder Abwinkelung abgefedert ist.

20. Schnellspannfutter nach einem der Ansprüche 1 bis 19, dadurch gekennzeichnet, daß das Verstell- oder Schiebeteil das Klemmplättchen (15) insbesondere beidseits seiner Durchtrittsöffnung (16) untergreift und radial verschiebbar ist.

21. Schnellspannfutter nach einem der Ansprüche 1 bis 20, dadurch gekennzeichnet, daß im unteren Bereich der Futterhülse (2) an deren Eintrittsöffnung eine Anfasung zum Erleichtern des Einführens der Werkzeugwelle (11) oder dergleichen und/oder ein Dichtring (6) oder O-Ring angeordnet sind.

22. Schnellspannfutter nach einem der Ansprüche 1 bis 21, dadurch gekennzeichnet, daß seine Anschlußmaße denen herkömmlicher Spannfutter an Rührwerken oder dergleichen entsprechen.

23. Schnellspannfutter nach einem der Ansprüche 1 bis 22, dadurch gekennzeichnet, daß die Aussparung mit der zum Verschwenken des Klemmplättchens (15) dienenden Abwinkelung

(23) dieses Klemmplättchens (15) und/oder das Verstellteil durch einen insbesondere elastischen Außenring abgeschlossen ist.
